(19) Europäisches Patentamt
European Patent Office
Office européen des brevets

(11) **EP 1 926 301 A2**

(12) **EUROPEAN PATENT APPLICATION**

(43) Date of publication:
**28.05.2008 Bulletin 2008/22**

(51) Int Cl.:
***H04N 1/40*** (2006.01)

(21) Application number: **07116111.1**

(22) Date of filing: **11.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **21.11.2006 KR 20060115505**

(71) Applicant: **Samsung Electronics Co., Ltd.**
**Suwon-si, Gyeonggi-do 442-742 (KR)**

(72) Inventor: **Kang, Ki-min,**
**Jugong 5-danji Apt. No. 506-204**
**Seongnam-si, Gyeonggi-do (KR)**

(74) Representative: **Perkins, Dawn Elizabeth**
**Venner Shipley LLP**
**20 Little Britain**
**London EC1A 7DH (GB)**

(54) **Image forming apparatus and control method thereof**

(57)  An image forming apparatus scans an object to be copied to generate a scanned image, and prints the scanned image generated by the scanning part. Printing is performed to produce a color copy or a monochrome copy according to a color format evaluation of the original image, such as by a determination of whether a difference between a color ratio of the scanned image and a standard color ratio corresponding to a gray value of the scanned image is equal to or larger than a predetermined value. The gray value may be determined from modeled characteristics of the image forming apparatus.

FIG. 1

EP 1 926 301 A2

## Description

The present invention is related most directly to image forming and control of image forming implementations, and more particularly, to an image forming apparatus and a control method thereof to reproduce a monochrome or color copy according to the coloration of an original image.

Generally, an image forming apparatus such as a copy machine, a multi-function printer, and other known image forming apparatuses in the art, implements scanning mechanisms to obtain a pixelated image representation of an object to be copied, such as an original image, and printing the pixelated image onto a printing medium, such as paper or other known media in the art, thereby producing a copied image.

An image forming apparatus may perform such copying of the original image to produce a color copy, and may alternatively produce a black-and-white copy, which may bereferred to herein as a "monochrome" copy. An image forming apparatus that supports both monochrome copying and color copying enables a user to select a preferred color format of the copied image.

In this regard, a copying technique is described in Japanese Patent Publication No. 2006-138930. According to the cited technology, the color format of the original image, i.e., whether the original image to be copied is color or monochrome, is determined, and either one of a color mode and a monochrome mode is selected according to the determined color format of the original image. Such automatic output is intended to avoid the inconvenience of having to manually select the monochrome copy mode or the color copy mode every time copying operations are performed.

However, to automatically determine whether to produce the monochrome copy or the color copy and then to perform such copying, copying performance factors of the image forming apparatus should be considered, such as:

   (1) Accuracy in determining monochrome/color
   (2) Efficiency in data processing

Accuracy in determining the monochrome/color format of the original image is essential to ensure that the reproduced image conforms to the user's intention and reliance on such automatic operation.

The copying operation comprises a scanning operation where a scanned image is obtained, color compensation on the scanned image, an image process such as a half toning and others known in the art to format the image into printer-compatible data, a printing operation on the processed image to render the reproduced image onto a medium, and other known operations in the art. Performing such copying operations requires processing a large quantity of data and the efficiency of the operations is thus a primary determinant of copy speed, component cost, and other image reproduction factors.

The present invention provides an image forming apparatus which is capable of enhancing accuracy in determining monochrome/color when determining if an original image is monochrome or color and performing a corresponding copy, and a control method thereof.

The present invention also provides an image forming apparatus which is more efficient in data processing when determining if an original image is monochrome or color and performing a corresponding copy, and a control method thereof.

Additional aspects and utilities of the present invention will be set forth in part in the description which follows and, in part, will be obvious from the description, or may be learned by practice of the present invention.

The foregoing and/or other aspects and utilities of the present invention are achieved by providing an image forming apparatus comprising a scanning part which performs scanning of an object to be copied to generate a scanned image, an image forming part which performs printing the scanned image generated by the scanning part; and a controlling part which controls the image forming part to perform printing a color copy or a monochrome copy according to whether a difference between a color ratio of the scanned image and a standard color ratio corresponding to a gray value of the scanned image as determined by characteristics of the image forming apparatus is equal to or larger than a predetermined value.

The gray value of the scanned image may comprise a mean pixel value of a plurality of pixels in a gray image generated by performing a gray transform upon the scanned image.

The color ratio of the scanned image may comprise a first color ratio of a color half tone image which is generated by performing a half toning upon the scanned image, and the standard color ratio may comprise a second color ratio of a mono half tone image which is generated by performing the gray transform and a half toning upon the scanned image.

The first color ratio and the second color ratio respectively may comprise at least one of a ratio of cyan/magenta (C/M) and a ratio of yellow/magenta (Y/M).

The image forming apparatus may further comprise a color half tone processing part which generates the color half tone image of the scanned image and a mono half tone processing part which generates the mono half tone image in parallel with the color half tone processing part, wherein the image forming part performs printing with regard to the color half tone image which is generated by the color half tone processing part or the mono half tone image which is generated by the mono half tone processing part.

The controlling part may determine whether each of a plurality of image blocks which are generated by dividing the scanned image is a color block or a monochrome block.

The controlling part may control the image forming part to perform printing the color copy or the monochrome copy according to whether, among the plurality of blocks, the number of contiguous color or monochrome blocks is equal to or larger than a predetermined number.

The foregoing and/or other aspects of the present invention may also be achieved by providing a control method of an image forming apparatus comprising a scanning part which performs scanning of an object to be copied to generate a scanned image and an image forming part which performs printing the scanned image generated by the scanning part, the control method comprising determining a color ratio of the scanned image, determining a standard color ratio which corresponds to a gray value of the scanned image according to characteristics of the image forming apparatus, and performing printing a color copy or a monochrome copy of the scanned image according to whether a difference between the color ratio of the scanned image and the standard color ratio is equal to or larger than a predetermined value.

The gray value of the scanned image may be determined from a mean pixel value of a plurality of pixels which are comprised in a gray image generated by performing a gray transform upon the scanned image.

The color ratio of the scanned image may be determined from a first color ratio of a color half tone image which is generated by performing a half toning upon the scanned image, and the standard color ratio may be determined from a second color ratio of a mono half tone image which is generated by performing the gray transform and a half toning upon the scanned image.

The color ratio of the color half tone image and the color ratio of the mono half tone image respectively comprise at least one of a ratio of cyan/magenta (C/M) and a ratio of yellow/magenta (Y/M).

The determining of the first color ratio of the scanned image may comprise generating the color half tone image of the scanned image, the determining of the standard color ratio may comprise generating the mono half tone image in parallel with generating the color half tone image, and the performing of the printing the color copy or the monochrome copy of the scanned image may comprise performing printing the color half tone image which is generated by generating the color half tone image or the mono half tone image which is generated by generating the mono half tone image.

The performing of the printing the color copy or the monochrome copy of the scanned image may comprise determining whether each of a plurality of image blocks which are generated by dividing the scanned image is a color block or a monochrome block.

The performing of the printing the color copy or the monochrome copy of the scanned image may comprise performing printing the color copy or the monochrome copy according to whether, among the plurality of image blocks, the number of contiguous color or monochrome blocks is equal to or larger than a predetermined number.

The foregoing and/or additional aspects and utilities of the present invention are also achieved by providing an image forming apparatus, comprising a storage part to store a pixelated image, an image forming part to generate an output image from a half tone representation of the pixelated image, and a controlling part to provide the half tone representation to the image forming part as one of a color half tone representation of the pixelated image and a mono half tone representation of pixelated image responsive to a color format of the pixelated image as determined from a difference between the color half tone representation thereof and the mono half tone representation thereof.

The foregoing and/or additional aspects and utilities of the present invention are also achieved by providing an image forming apparatus, comprising an image processing part to generate a color half tone image of a pixelated image and a mono half tone image of the pixelated image, an image forming part to generate an output image from one of the color half tone image and the mono half tone image responsive to determination of a color format of the pixelated image, and a controlling part to make the determination of the color format of the pixelated image from a first color ratio of the color half tone image and a second color ratio of the mono half tone image.

The foregoing and/or additional aspects and utilities of the present invention are also achieved by providing an image forming method, comprising generating a color half tone representation and a mono half tone representation of a pixelated image, determining a first color ratio between colors in a plurality of regions of the color half tone representation, determining a second color ratio in the plurality of regions of the mono half tone representation between respective monochrome converted colors of the colors in the color half tone representation, and generating an output image from the color half tone image upon a positive determination that a difference between the first color ratio and the second color ratio in a predetermined number of regions is greater than a predetermined value.

The foregoing and/or additional aspects and utilities of the present invention are also achieved by providing an image forming control apparatus, comprising an image processing part to generate a color half tone image and a mono half tone image from a pixelated image, and a controlling part to provide a control signal indicative of a color format of the pixelated image, the controlling part determining the color format from a difference between color values in the color half tone image and the color values corresponding to monochrome values in the mono half tone image.

The foregoing and/or additional aspects and utilities of the present invention are also achieved by providing an image forming apparatus, comprising: an image forming part to print an image; and a controlling part to control the image forming part to print a color copy image of the image and a monochrome copy image of the image according to a color ratio and a gray value of the image.

The foregoing and/or additional aspects and utilities of the present invention are also achieved by providing an image forming apparatus, comprising: an image processing part to process an image to be printed; and a controlling part to control the image processing part to generate a color copy image and a monochrome copy image of the image according to a color ratio and a gray value of the image.

The foregoing and/or additional aspects and utilities of the present invention are also achieved by providing an image forming apparatus, comprising: an image processing part to process an image to be printed; a controlling part to control the image processing part to generate a color copy image and a monochrome copy image of the image according to a color ratio and a gray value of the image; and an image forming part to print one of the color copy image and the monochrome copy image on a printing medium.

These and/or other aspects and utilities of the present invention will become apparent and more readily appreciated from the following description of the exemplary embodiments, taken in conjunction with the accompanying drawings, in which:

Figure 1 is a block diagram illustrating an exemplary system configuration of an image forming apparatus according to an embodiment of the present invention;

Figure 2 is a flow diagram illustrating an operation of the image forming apparatus according to the exemplary embodiment of the present invention;

Figure 3 is an illustration of blocks which are generated by dividing an image according to the exemplary embodiment of the present invention;

Figure 4 is a graph depicting a CMY value plotted against a gray value according to the exemplary embodiment of the present invention;

Figure 5 is an illustration of adjacent color blocks which are contiguous one with another according to the exemplary embodiment of the present invention.

Reference will now be made in detail to the embodiments of the present invention, examples of which are illustrated in the accompanying drawings, wherein like reference numerals refer to like elements throughout. The exemplary embodiments are described below so as to explain the present invention by referring to the figures.

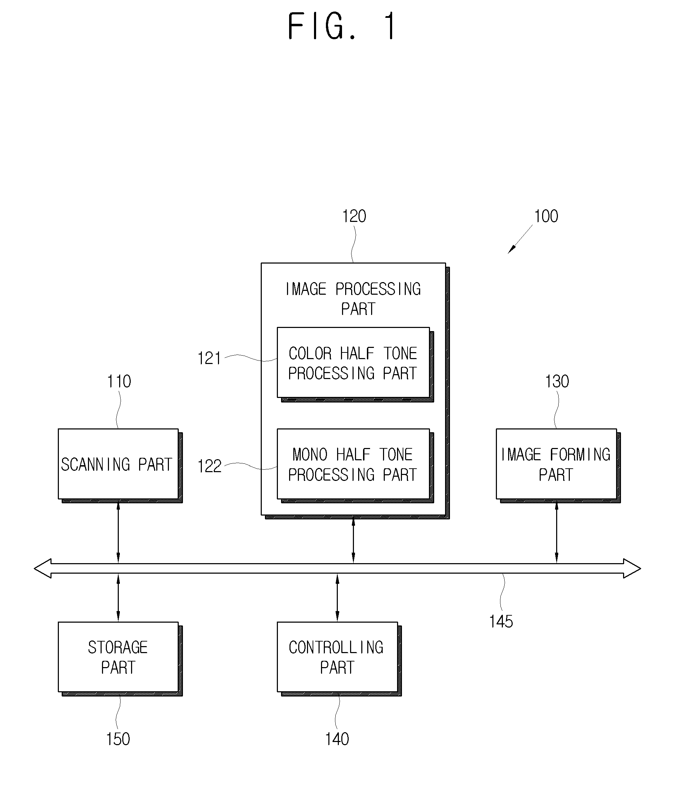

Figure 1 is a block diagram depicting a simplified architecture of an image forming apparatus 100 according to an exemplary embodiment of the present invention. The image forming apparatus 100 may be embodied by a copy machine, a multi-function printer or other similar image forming apparatuses. Additionally, while the illustrated compartmentalization of functionality facilitates description of various features of the present invention, other configurations of components other than that illustrated will become apparent to the skilled artisan upon review of this disclosure. For example, functionality of individual components may be combined into a single functional element and functionality described in terms of discrete elements may be distributed across numerous components. It is to be understood that the present invention is intended to embrace all such variants thereof.

As illustrated in Figure 1, the image forming apparatus 100 comprises a scanning part 110, an image forming part 130, a controlling part 140, and a storage part 150. The scanning part 110 performs scanning of an object to be copied (not illustrated), all or a portion of which may include an image, to obtain a scanned image. Although the object to be copied may be any physical object, the likeness of which will be created in the scanning operation, the object to be copied in the descriptions to follow will be referred to as an "original image," without limiting the present invention to copying only "images" as they are conventionally known. Moreover, the present invention is not limited to the type of scanning mechanism and the implementation details of such will be omitted in the interest of brevity, except where such details are pertinent to the description of the present invention.

The image forming part 130 performs printing of the scanned image obtained by the scanning part 110 onto a printing medium (not illustrated), such as paper or other such printing media, to form a copied image. The image forming part 130 may be configured to print the copied image in alternative color formats, such as multi-color and grayscale renditions of the copied image. Again, the present invention is not limited to the type of printing mechanism and the implementation details of such will be omitted in the interest of brevity, except where such details are pertinent to the description of the present invention.

As illustrated in Figure 1, the image forming apparatus 100 includes a controlling part 140 to coordinate operations among the various components and concomitant functionality thereof. The controlling part 140 may be implemented as a processor executing processing instructions stored in a code segment of a memory, such as, for example, in storage part 150, or may be implemented in interconnected circuit elements without relying on access to a code segment in memory. The controlling part 140 may cooperate with the other components in the exemplary through a suitable communication pathway, such as bus 145. It is to be understood that the communication pathway and the communication protocol implemented thereon may be realized in a wide variety of architectures, to include both wired and wireless technologies, without departing from the spirit and intended scope of the present invention.

Storage part 150 may store not only code, as indicated above, but may also provide storage for pixelated images during image processing operations, such as those described below. As such, the storage part 150 may be a combination of persistent storage, such as by read-only memory (ROM), flash memory, magnetic or optical storage devices, and others, and volatile memory, such as random-access memory (RAM), and others. It is to be understood, also, that although the storage part 150 is illustrated as a discrete element in Figure 1, the storage part 150 may be distributed among multiple devices, including as an element in the other components illustrated. For purposes of description, and not limitation, storage part 150 will be discussed below as if it were a discrete element, and, as used herein, the term "storage part 150," or, alternatively "memory 150," is intended to refer to the combined storage capability of the image forming apparatus 100, to include temporal storage, such as by pipelining and delay lines.

The controlling part 140 may control, for example, the image forming part 130 to print a color copy or a monochrome copy responsive to a determination of whether the original image is color or monochrome. Specifically, the controlling part 140 may determine whether the original image is color or monochrome and control the image forming part 130 to print according to the same color format as the original. The determination of the color format, i.e., the set of chromatic tones used to represent colors including shades of gray in the image, may be made by determining a difference between a full color representation of the original image and the full color representation converted into monotone. A small difference would indicate that the original image is in a monochrome format, whereas a large difference would indicate that the original image is in color. In certain embodiments of the present invention, the foregoing difference determination may be achieved, for example, by computing a difference between a first color ratio of the scanned image, which is obtained by the scanning part 110, and a second color ratio, which is determined by characteristics of the image forming apparatus 100 that affect monochrome production of the scanned image, and determining whether the difference of ratios is equal to or larger than a predetermined amount.

The image forming apparatus 100, according to this exemplary embodiment of the present invention, may further comprise an image processing part 120 to determine whether the original image color format is color or monochrome. The image processing part 120 may be implemented in hardware, software, or a combination of both, to execute the processes and operations described in the paragraphs that follow. For example, the image processing part 120 may be a processor executing processing instructions maintained in storage part 150. The image processing part 120 may be cooperatively executed on a processor implementing other components of image forming apparatus 100, such as the controlling part 140. It is to be understood that the present invention is intended to encompass these and other such alternatives and variations.

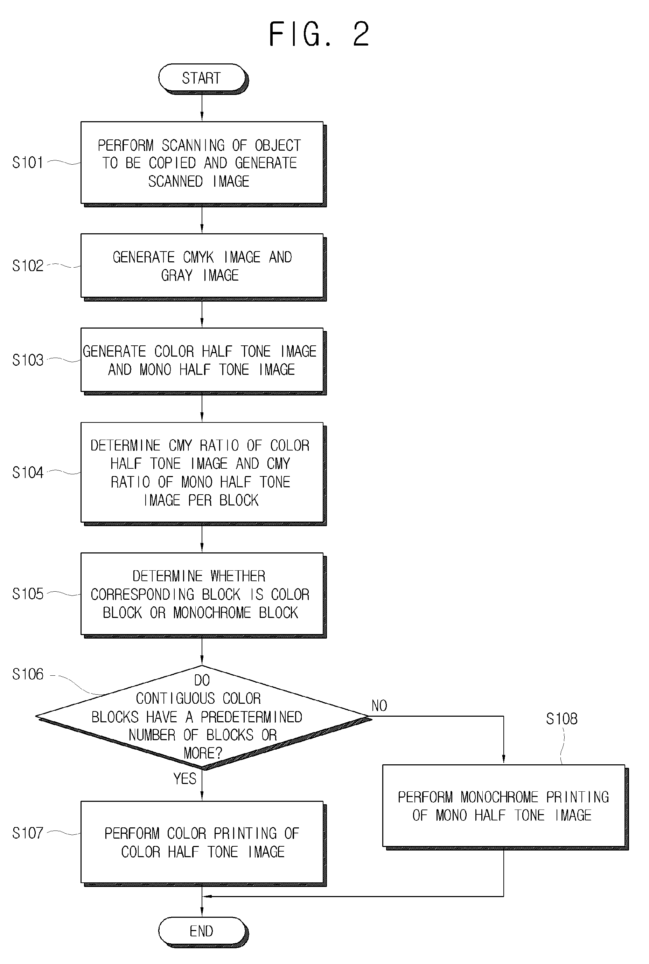

The image forming apparatus 100, according to this exemplary embodiment of the present invention, is described in detail with reference to Figure 1, and with reference to Figure 2, which is a flow diagram depicting concomitant processes of the image forming apparatus 100 in accordance with the exemplary embodiment of the present invention. As illustrated in Figure 2, operation S101 invokes the scanning part 110 to scan the original image responsive to, for example, a control signal applied by the controlling part 140, to form the scanned image, which may then be stored in storage part 150. In certain embodiments of the present invention, the scanning part 110 performs color scanning of the original image to obtain a color scanned image. The color scanned image is in a color format consistent with the operation of the scanning part 110, such as a red-green-blue (RGB) color format, and may be stored in memory 150 in accordance with that color format.

The image processing part 120 may then perform an image processing operation S102 on the scanned image stored in memory 150 to generate a formatted color image consistent with the operation of the image forming part 130. For example, when the image forming part 130 is a printer engine for applying ink or toner in the cyan-magenta-yellow-black (CMYK) format, the format of the output image would be CMYK. The image processing part 120 not only produces a formatted color image, but a monotone image as well, such as a grayscale equivalent image of the original image. The image processing part 120 may obtain the CMYK image by performing a suitable RGB-CMYK transform on the scanned image in RGB format. The image processing part 120 may obtain the grayscale image by performing a suitable color-gray transform on the color scanned image. When generating the CMYK image and the grayscale image, the image processing part 120 may further perform image compensation processes, such as color compensation and other appropriate image compensation techniques.

In operation S103, the image processing part 120 performs color half tone processing and monochrome half tone processing upon the CMYK image and the grayscale image, respectively, to generate a color half tone image and a mono half tone image. The image processing part 120 may comprise a color half tone processing part 121 and a mono half tone processing part 122 to perform color half tone processing and mono half tone processing, respectively. The color half tone processing part 121 and the mono half tone processing part 122 may perform the color half tone processing and the mono half tone processing in respective processes performed operationally in parallel one with another. The color half tone image and the mono half tone image may be stored in memory 150.

In operation S104, the exemplary controlling part 140 determines a CMY ratio, to be described below, of the color half tone image and a CMY ratio of the mono half tone image. The controlling part 140 may compute the CMY ratio on each of a plurality of blocks by dividing the color half tone image and the mono half tone image, respectively, into predetermined sized blocks.

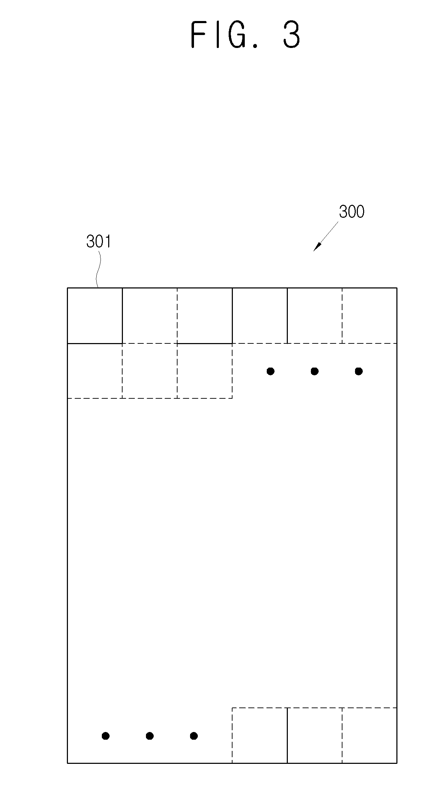

Figure 3 illustrates exemplary blocks as generated by dividing each image according to this exemplary embodiment of the present invention. As illustrated in Figure 3, reference numeral 300 indicates the color half tone image or the mono half tone image, and reference numeral 301 indicates one block in the corresponding image. The size and number of the blocks may vary, such as in accordance with the size of the image. For purposes of description and not limitation, in the exemplary embodiment described and illustrated, the block is set to be a 64x64 pixel block.

The CMY ratio of the color half tone image may be determined by a ratio of a number of dots in each block of each of a pair of colors, and may comprise, for example, a dot ratio (C,M) and a dot ratio (Y,M), as illustrated in equation (1) and equation (2) which follow It is to be understood that the term "dot" is not intended to be synonymous with the term "pixel", although, in certain cases, a dot may comprise only a single pixel. In general, however, a dot may span a number of pixels depending on the half tone process applied to the scanned image. It is to be assumed that the size of the dot, either in terms of pixels or some other defined characterization, such as through a structure or other storage object maintained in the memory 150, is known to the embodiments of the present invention so that a number of dots in a block can be evaluated.

The CMY ratio of the color half tone image may be referred herein to as "the color ratio of the scanned image".

$$\text{Dot ratio (C,M)} = (\text{number of cyan dots})/(\text{number of magenta dots}) \qquad \text{(Equation 1)}$$

$$\text{Dot ratio (Y,M)} = (\text{number of yellow dots})/(\text{number of magenta dots}) \qquad \text{(Equation 2)}$$

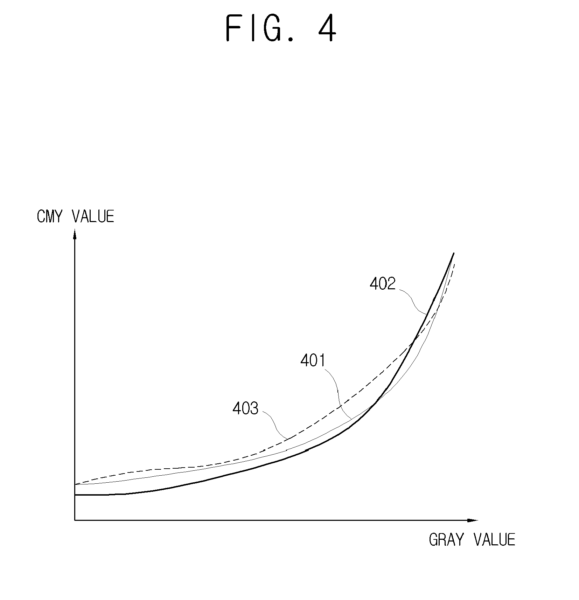

In accordance with provisions of the present invention, the CMY ratio of the mono half tone image is allows a similar ratio measure in the mono half tone image by obtaining monochrome values consistent with the image reproduction characteristics of the image forming apparatus 100. For example, a monochrome value may be obtained from modeled capabilities of the image forming apparatus 100, e.g., the model would provide the gray value of a monochrome output image that would be produced by the image forming apparatus 100 responsive to an input color image. Figure 4 illustrates such a model as a graph of CMY values plotted against corresponding gray values according to this exemplary embodiment of the present invention. The graph of Figure 4 illustrates a relation between a neutral gray, that is, the achromatic gray value of the original image as determined by, for example, a suitable visual estimation process, and the CMY value of the formatted color image. In Figure 4, reference numerals 401, 402 and 403 indicate exemplary cyan, magenta and yellow values, respectively. The gray value illustrated in Figure 4 and its corresponding CMY values may be stored in memory 150 as a lookup table (hereinafter, referred to as the "gray-CMY lookup table"). It is to be understood that the modeled output of the lookup table can be generated in equipment separate from the image forming apparatus 100.

The controlling part 140 may compute a mean pixel value of the pixels in each block of the mono half tone image as the gray value for the corresponding block. The controlling part 140 may then determine the CMY ratio corresponding to the gray value of each block by retrieving color data from the gray-CMY look-up table corresponding to the gray value. The CMY ratio of the mono half tone image may thus comprise a gray balance ratio (C,M) and a gray balance ratio (Y,M) as exemplified by equation (3) and equation (4) below. In each computation of the gray balance ratio (C,M) and the gray balance ratio (Y,M) in equations (3) and (4), respectively, the entire set of values of C, M, and Y are obtained from the gray-CMY lookup table for a single corresponding mean gray value determined from the block in the mono half tone image. The CMY ratio of the mono half tone image may be referred to herein as a "standard image ratio".

$$\text{Gray balance ratio (C,M)} = (\text{cyan value})/(\text{magenta value}) \qquad \text{(Equation 3)}$$

$$\text{Gray balance ratio (Y,M)} = (\text{yellow value})/(\text{magenta value}) \qquad \text{(Equation 4)}$$

In operation S105, the controlling part 140 determines whether each block is a color block or a monochrome block by determining if a difference between the dot ratio (C,M) and the gray balance ratio (C,M) is smaller than a predetermined value T1 and if a difference between the dot ratio (Y,M) and the gray balance ratio (Y,M) is smaller than a predetermined value T2. These relations may be expressed as conditional statements as follows:

[Conditional statement]

```
if {((dot ratio(C,M) -gray balance ratio(C,M))<T1} AND

{((dot ratio(Y,M) - gray balance ratio(Y,M))<T2}

then monochrome block

else color block
```

It is to be understood that the conditional statement above is merely an illustration of a possible implementation of its underlying determination, for which many other implementations are also possible and usable with the present invention without departing from the spirit and intended scope thereof. In accordance with the exemplary embodiment, if the difference between the dot ratio (C,M) and the gray balance ratio (C,M) is smaller than the predetermined value T1 and if the difference between the dot ratio (Y,M) and the gray balance ratio (Y,M) is smaller than the predetermined value T2, the controlling part 140 determines that the corresponding block is a monochrome block, and if otherwise, the controlling part 140 determines the corresponding block to be a color block.

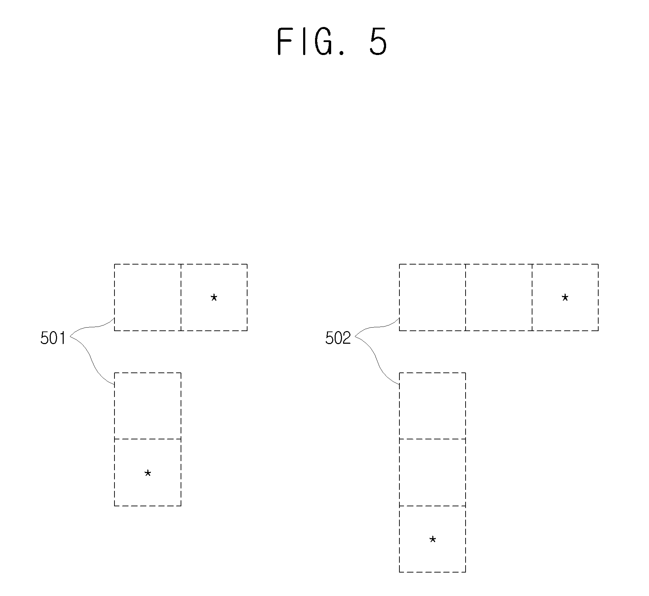

In operation S106 of the exemplary embodiment, the controlling part 140 determines if, among the color blocks, the number of contiguous color blocks is equal to or larger than a predetermined number. Figure 5 illustrates examples of adjacent color blocks which are contiguous one with another according to this exemplary embodiment of the present invention. Reference numerals 501 and 502 represent an example of 2 contiguous color blocks and an example of 3 contiguous color blocks, respectively. It is to be understood that contiguous blocks need not be arranged linearly, but may also extend in multiple directions.

At operation S106, if the number of contiguous color blocks spans more than a predetermined number of blocks, the controlling part 140 determines that the corresponding original image is a color image and, at operation S107, sets the default output mode of the image forming part 130 to perform the color printing in accordance with the color half tone image. It is to be understood, however, that such default output mode may be overridden, such as by manual user intervention, to output the image in an alternative format.

On the other hand, if the controlling part 140 determines that no color blocks are found in the corresponding scanning image at S105 or that the number of contiguous color blocks does not span a number of blocks greater than the predetermined number, the controlling part 140 determines that the corresponding original image is monochrome and, at operation S108, sets the default output mode of the image forming part 130 to perform the mono printing in accordance with the mono half tone image.

As discussed above, the controlling part 140 according to this exemplary embodiment of the present invention may be embodied by a computer program executed on a suitable computing platform. The controlling part 140 may include a read only memory (ROM) in storage part 150 in which the computer program is stored, a random access memory (RAM) in storage part 150 into which the computer program stored in the ROM is loaded, and a processor (not separately illustrated as such) which executes the computer program loaded in the RAM.

Certain embodiments of the present invention provide for the functional components to manufactured, transported, marketed and/or sold as processor instructions encoded on computer-readable media. The present invention, when so embodied, can be practiced regardless of the processing platform on which the processor instructions are executed and regardless of the manner by which the processor instructions are encoded on the medium.

It is to be understood that the computer-readable medium may be any medium on which the instructions may be encoded and then subsequently retrieved, decoded and executed by a processor, including electrical, magnetic and optical storage devices, and wired, wireless, optical and acoustical communication channels. The computer readable medium may include either or both of persistent storage, referred to herein as "computer-readable recording media" and as spatiotemporal storage, referred to herein as "computer-readable transmission media". Examples of computer-readable recording media include, but not limited to, read-only memory (ROM), random-access memory (RAM), and other electrical storage; CD-ROM, DVD, and other optical storage; and magnetic tape, floppy disks, hard disks and other magnetic storage. The computer-readable recording media may be distributed across components, to include such distribution through storage systems interconnected through a communication network. The computer-readable trans-

**EP 1 926 301 A2**

mission media may transmit encoded instructions on electromagnetic carrier waves or signals, or as acoustic signals through acoustically transmissive media. Moreover, the processor instructions may be derived from algorithmic constructions of the present invention in various programming languages, the mere contemplation of which illustrates the numerous realizable abstractions of the present invention.

As described above, according to the present invention, when determining if an original image is in a monochrome or color format and performing a corresponding copy, accuracy in determining monochrome/color may be enhanced by basing the determination on the characteristics of the image forming apparatus performing the copy operations.

Also, according to the present invention, much of the data processing is reduced to lookup table access an simple comparison operations to determine if the original image is monochrome or color, thereby reducing data processing overhead, which allows a corresponding reduction in the cost of processing components, but with an increase in data processing speed.

Also, according to the present invention, when determining if the original image is monochrome or color and performing a corresponding copy, the copy speed may be enhanced by performing the color half tone processing and the mono half tone processing in parallel.

Although a few exemplary embodiments of the present invention have been illustrated and described, it will be appreciated by those skilled in the art that changes may be made in these exemplary embodiments without departing from the scope of the invention as defined in the appended claims.

**Claims**

1. An image forming apparatus comprising:

   a scanning part (110) configured to scan an object to generate a color representation of the object;
   an image processing part (120) configured to convert the color representation into a monotone representation; and
   a controller (140) configured to control output based on one of the color representation or the monotone representation depending on the result of a comparison between the color representation and the monotone representation.

2. The image forming apparatus according to claim 1, further comprising:

   an image forming part (130) configured to print a color copy based on the color representation or a monochrome copy based on the monochrome representation.

3. The image forming apparatus according to claim 1 or 2, wherein the comparison comprises determining a difference between a color ratio of the color representation and a standard color ratio corresponding to a gray value of the monotone representation.

4. The image forming apparatus according to claim 3, wherein the gray value of the monotone representation comprises a mean pixel value of a plurality of pixels in a gray image generated by performing a gray transform upon the color representation.

5. The image forming apparatus according to claim 4, wherein the color ratio of the color representation comprises a first color ratio of a color half tone image which is generated by performing a half toning upon the color representation, and the standard color ratio comprises a second color ratio of a mono half tone image which is generated by performing the gray transform and a half toning upon the color representation.

6. The image forming apparatus according to claim 5, wherein the first color ratio and the second color ratio respectively comprise at least one of a ratio of cyan/magenta (C/M) and a ratio of yellow/magenta (Y/M).

7. The image forming apparatus according to claim 5 or 6, wherein the image processing part (120) further comprises a color half tone processing part (121) configured to generate the color half tone image of the scanned image and a mono half tone processing part (122) configured to generate the mono half tone image in parallel with the color half tone processing part (121), wherein the image forming part (130) is configured to perform printing with regard to the color half tone image which is generated by the color half tone processing part (121) or the mono half tone image which is generated by the

8

mono half tone processing part (122).

8. The image forming apparatus as claimed in any one of claims 1 through 5, wherein the controller (140) is configured to compare the representations by determining whether each of a plurality of image blocks which are generated by dividing the scanned image is a color block or a monochrome block.

9. The image forming apparatus according to claim 8, wherein the controller (140) is configured to control the image forming part to perform printing the color copy or the monochrome copy according to whether, among the plurality of blocks, the number of contiguous color or monochrome blocks is equal to or larger than a predetermined number.

10. A control method of an image forming apparatus, the control method comprising:

converting a scanned color image into a monotone image;
comparing the color image and the monotone image; and
on the basis of the comparison, selecting the color image or the monotone image for output.

11. The control method of an image forming apparatus according to claim 10, wherein the comparing comprises:

determining a color ratio of the color image;
determining a color ratio which corresponds to a gray value of the monotone image; and
determining a difference between the color ratio of the color image and the color ratio of the monotone image is equal to or larger than a predetermined value.

12. The control method of an image forming apparatus according to claim 11, further comprising performing printing of a color copy or a monotone copy depending on the color ratio difference.

13. The control method of an image forming apparatus according to claim 11 or 12, wherein determining the gray value of the monotone image includes determining a mean pixel value of a plurality of pixels which are comprised in a gray image generated by performing a gray transform upon the scanned image.

14. The control method of an image forming apparatus according to claim 11, 12 or 13, wherein the determining of the color ratio of the color image includes determining a first color ratio of a color half tone image which is generated by performing a half toning upon the scanned image, and the determining of the color ratio of the monotone image includes determining a second color ratio of a mono half tone image which is generated by performing a gray transform and a half toning upon the color image.

15. The control method of an image forming apparatus according to claim 14, wherein the determining of the first color ratio of the color half tone image and the determining of the second color ratio of the mono half tone image respectively include determining at least one of a ratio of cyan/magenta (C/M) and a ratio of yellow/magenta (Y/M).

16. The control method of an image forming apparatus according to claim 14 or 15, wherein determining the color ratio of the color image comprises generating the color half tone image of the scanned image,
determining the color ratio of the monotone image comprises generating the mono half tone image in parallel with generating the color half tone image, and
performing printing the color copy or the monochrome copy of the scanned image comprises performing printing the color half tone image which is generated by generating the color half tone image or the mono half tone image which is generated by generating the mono half tone image.

17. The control method of an image forming apparatus as claimed in any one of claims 10 through 16, wherein performing printing the color copy or the monochrome copy of the scanned image includes determining whether each of a plurality of image blocks which are generated by dividing the scanned image is a color block or a monochrome block.

18. The control method of an image forming apparatus according to claim 17, wherein the performing of the printing the color copy or the monochrome copy of the scanned image includes performing printing the color copy or the monochrome copy according to whether, among the plurality of image blocks, the number of contiguous color or monochrome blocks is equal to or larger than a predetermined number.

19. An image forming apparatus, according to claim 1, wherein the image processing part (120) is configured to generate a color half tone representation of a scanned image and a mono half tone representation of the scanned image; and the controller (140) is configured to determine a color format of the image from a difference between the color half tone representation thereof and the mono half tone representation thereof.

20. The image forming apparatus according to claim 19, wherein the controller (140) is configured to determine the difference between the color half tone representation and the mono half tone representation from a first color ratio of the color half tone representation and a second color ratio of the mono half tone representation.

21. The image forming apparatus according to claim 20, comprising a storage part (150) having stored therein a lookup table of a plurality of color values respectively assigned to each of a plurality of monochrome values, wherein the controller (140) is configured to access the lookup table to determine the second color ratio.

22. The image forming apparatus according to claim 21, wherein the monochrome values in the lookup table are modeled output values of an image forming part (130) corresponding to one of the color values when produced in a monochrome output image by the image forming part (130).

23. The image forming apparatus according to claim 22, wherein the controller (140) retrieves the color values from the lookup table corresponding to a mean pixel value in a region of the mono half tone representation.

24. The image forming apparatus according to any one of claims 20 to 23, wherein the controller (140) calculates the first color ratio from a number of dots of one color in a region of the color half tone image and a number of dots of another color in the region of the color half tone image.

25. An image forming method, comprising:

generating a color half tone representation and a mono half tone representation of a pixelated image;
determining a first color ratio between colors in a plurality of regions of the color half tone representation;
determining a second color ratio in the plurality of regions of the mono half tone representation between respective monochrome converted colors of the colors in the color half tone representation; and
generating an output image from the color half tone representation upon a positive determination that a difference between the first color ratio and the second color ratio in a predetermined number of regions is greater than a predetermined value.

26. An image forming apparatus comprising:

a scanning part which performs scanning of an object to be copied to generate a scanned image;
an image forming part which performs printing the scanned image generated by the scanning part; and
a controlling part which controls the image forming part to perform printing a color copy or a monochrome copy according to whether a difference between a color ratio of the scanned image and a standard color ratio corresponding to a gray value of the scanned image as determined by characteristics of the image forming apparatus is equal to or larger than a predetermined value.

27. A control method of an image forming apparatus comprising a scanning part which performs scanning of an object to be copied to generate a scanned image and an image forming part which performs printing the scanned image generated by the scanning part, the control method comprising:

determining a color ratio of the scanned image;
determining a standard color ratio which corresponds to a gray value of the scanned image according to characteristics of the image forming apparatus; and
performing printing a color copy or a monochrome copy of the scanned image according to whether a difference between the color ratio of the scanned image and the standard color ratio is equal to or larger than a predetermined value.

# FIG. 1

# FIG. 2

START

S101 — PERFORM SCANNING OF OBJECT TO BE COPIED AND GENERATE SCANNED IMAGE

S102 — GENERATE CMYK IMAGE AND GRAY IMAGE

S103 — GENERATE COLOR HALF TONE IMAGE AND MONO HALF TONE IMAGE

S104 — DETERMINE CMY RATIO OF COLOR HALF TONE IMAGE AND CMY RATIO OF MONO HALF TONE IMAGE PER BLOCK

S105 — DETERMINE WHETHER CORRESPONDING BLOCK IS COLOR BLOCK OR MONOCHROME BLOCK

S106 — DO CONTIGUOUS COLOR BLOCKS HAVE A PREDETERMINED NUMBER OF BLOCKS OR MORE?

NO

YES

S107 — PERFORM COLOR PRINTING OF COLOR HALF TONE IMAGE

S108 — PERFORM MONOCHROME PRINTING OF MONO HALF TONE IMAGE

END

# FIG. 3

# FIG. 4

# FIG. 5

501

502

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006138930 A